Europäisches Patentamt

European Patent Office

Office européen des brevets

(11) Publication number: **0 177 887**
A2

(12) **EUROPEAN PATENT APPLICATION**

(21) Application number: **85112453.7**

(22) Date of filing: **02.10.85**

(51) Int. Cl.⁴: **A 23 L 1/226**

(30) Priority: **10.10.84 IT 2310984**

(43) Date of publication of application: **16.04.86**
**Bulletin 86/16**

(84) Designated Contracting States: **AT BE CH DE FR GB LI NL SE**

(71) Applicant: **SENTOSA s.a.s., Viale Sabotino 9, Milano (IT)**

(72) Inventor: **Rigoli, Arturo, via Copernico 53, I-20100 Milano (IT)**

(74) Representative: **Gervasi, Gemma, Dr. et al, Studio Brevetti e Marchi NOTARBARTOLO & GERVASI 33, Viale Bianca Maria, I-20122 Milano (IT)**

(54) **Alimentary composition having the aroma of eatable mushrooms.**

(57) Alimentary composition having the aroma of eatable mushroom, obtained by dissolving 1-octen-3-ol, possibly as a mixture with one or more compounds selected from the group consisting of 2-octen-1-ol, 1-octen-3-one, 3-octanone, 3-octanol, in alimentary fats.

EP 0 177 887 A2

"ALIMENTARY COMPOSITIONS HAVING THE AROMA OF EATABLE MUSH-
ROOM"

### Disclosure

The present invention relates to alimentary compositions having the aroma of eatable mushroom.

More in particular, the present invention relates to alimentary compositions on the basis of alimentary fats, containing aromatizing substances, that give the aroma of eatable mushrooms.

Many volatile chemical substances, contained in the eatable mushrooms are known (J. Agr. Food Chem., Vol. 21 n° 6, 1973, pages 959-962 and Acta Chemica Scandinavica B 30 (1976) 235-244).

So, for example, it is known that in the following eatable mushrooms: Cantarellus cibarius, Cyronitra esculenta, Boletus edulis, Lactarius trivialis, Lactarius torminosus, Agaricus bisporus and Lactarius rufus such subtsances are contained as: butanol, 2-methyl-2-penten-4-one, 3-methylbutanol, pentanol, 3 octanone, 1-octen-3-one, 4-methyl-pentanol, hexanol, 3-octanol, trans-2-octenal, 1-octen-3-ol, furfurol, benzaldehyde, octanol, trans-2-octen-1-ol, nonanol and other alcohols,ketones, aldehydes, esters and still other compounds.

It is still known that the eatable mushrooms are very expensive, and that their preservation requires particular precautions and that after the preservation their initial smell results altered both in dried mushrooms and in mushrooms in oil.

The preparation of dishes having the aroma of fresh mushrooms is a very laborious operation, even if the mushroom has been picked up at the right maturation point, with the aroma at its highest intensity and is used within a very short time.

We have now found that all these drawbacks can be overcome  by the compositions according to the present invention, that allow to prepare foods having the aroma of fresh mushrooms and at the right maturation point at any time, in very short times and by simple operations, besides being suitable for the preparation of pre-cooked food or tinned food.

The alimentary composition having the aroma of eatable mushrooms according to the present invention are characterized in that they are composed by alimentary fat containing from 0,005 to 50 per cent by weight of 1-octen-3-ol or of mixtures of this compound with one or more compounds chosen in the group consisting of 2-octen-1-ol, 1-octen-3-one, 3-octanone and 3-octanol.

These and other characteristics and advantages of the compositions according to the present invention will result more evident from the following detailed disclosure, which is reported to illustrative but not limitative purposes of the invention itself.

The process for the preparation of the compositions according to the invention consists in dissolving in an eatable oil or in butter, from 0,005 to 50% by weight of 1-octen-3-ol or of a mixture made of from 60 to 90% by weight of 1-octen-3-ol, from 5 to 35% by weight of 2-octen-1-ol, from

3.

0177887

0,2 to 10% by weight of 1-octen-3-one, from 0,2 to 5% by weight of 3-octanone and from 0,2 to 5% by weight of 3-octanol.

The dissolving of such substances in oil or in butter is effected by shaking, at a temperature comprised within the range of from 10°C to 180°C, preferably of from 15°C to 30°C, in the case of oil a perfectly clear solution being obtained.

The oil can be of the type usually used for the flavouring, either olive oil or seed oil or an oil of dietetic type.

Compositions containing from 0,005 to 1% by weight of one or more aromatizing substances, can be used directly to give the desired mushroom aroma to fresh foods, or to pre-cooked or tinned foods.

Within these percentage ranges, the compositions according to the invention generate an aroma equivalente to that of the natural products.

Compositions containing from 1,1 to 50% by weight of one or more aromatizing substances, constitute concentrates to be diluted at the time of their use with fats, up to fall within the above-said percentage ranges, suitable for their direct use.

The compositions according to the inventor have resulted absolutely stable in time and so they are preservable without the occurrence of aroma alterations.

For large packings, glass containers or cans are used of the type commonly used for the transport, or for the storage of oil. For small packings, on the contrary, either small bags of polythene/ aluminium composites or small glass containers are used.

A problem, arising when using the compositions accord-

0177887

ing to the invention, is the achievement of the right dosage in their administering to the foods in order to give them the desired aroma grading.

The right dosage results infact hard to be obtained because of the oil viscosity.

We have solved this problem by employing a particular metering device made of plastic material, that allows to distribute the right dosage to be distributed as a function of the  amount of food to be aromatized.

0177887

Claims

1. Alimentary compositions having the aroma of eatable mushrooms, characterized in that they are constituted by alimentary fats containing from 0,005 to 50% by weight of 1-octen-3-ol of or a mixture of 1-octen-3-ol, either one or more of the compound chosen in the group consisting of 2-octen-1-ol, 1-octen-3-ol, 3-octanone and 3-octanol.

2. Alimentary compositions according to claim 1, characterized in that such mixture is constituted by from 60 to 95% by weight of 1-octen-3-ol from 5 to 35% by weight of 2-octen-1-ol, and/or from 0,2 to 10% by weight of 1-octen-3-one and/or from 0,2 to 5% by weight of 3-octanone and/or from 0,2 to 5% by weight of 3-octanol.

3. Alimentary compositions according to claim 1, characterized in that they contain from 0,005 to 1% by weight of 1-octen-3-ol or of such mixture, suitable to be used directly to give the desired mushrooms aroma either to fresh foods, or to pre-cooked or tinned foods.

4. Alimentary compositions according to claim 1, characterized in that they contain from 1,1 to 50% by weight of 1-octen-3-ol or of such mixture, constituting concentrates to be diluted at the time of use with opportune fats up to a content of such mixture comprised within the range of from 0,005 to 1% by weight.

5. Alimentary compositions according to claim 1, characterized in that such alimentary fats are butter, olive oil, seed oil or a dietetic oil.